# EUROPEAN PATENT APPLICATION

(11) **EP 4 122 721 A1**
(43) Date of publication of application: **25.01.2023**
(21) Application number: 20925150.3
(22) Date of filing: 25.12.2020
(51) Int. Cl.: B60C 19/00, B60C 23/04

(54) **FUNCTIONAL COMPONENT, STRUCTURE FOR ATTACHING FUNCTIONAL COMPONENT, AND TIRE**

(30) Priority: 19.03.2020 JP 2020048529
(71) Applicant: BRIDGESTONE CORPORATION, Chuo-ku Tokyo 104-8340 (JP)
(72) Inventor: YAMAGUCHI, Shigeru, Tokyo 104-8340 (JP)
(74) Representative: Marks & Clerk LLP
(86) International application number: PCT/JP2020/048858
(87) International publication number: WO 2021/186838

(57) **Abstract**

To provide a functional component or the like which is capable of, when attaching a functional component to a tire, stably detecting information indicative of a usage state of the tire, there is provided a functional component in which an electronic component capable of acquiring information on a tire is housed and which is attachable to an inner circumferential surface of the tire. The functional component includes: a housing having a housing part in which the electronic component is housed and a bottom surface to be opposed to the inner circumferential surface of the tire; a strain detection means provided on the bottom surface and configured to detect strain of the tire; a support part extending from the bottom surface toward the inner circumferential surface of the tire and more protruding than a surface of the strain detection means; and an elastic part made of an elastomer having a rigidity smaller than that of a material forming the support part and interposed between the bottom surface and the inner circumferential surface of the tire.

## Description

### TECHNICAL FIELD

The present invention relates to a functional component or the like that can be attached to a tire.

### BACKGROUND ART

Conventionally, there has been known an attachment structure for fitting a functional component, which has an electronic component housed in a case (housing) for acquiring a use state of a tire, into a patch component which is formed as one component by vulcanizing and molding rubber in advance and which has been vulcanization-adhered to an inner surface of the tire, and attaching the functional component to the tire. The patch component is set to have a thickness and a shape so as to form a rubber layer of a predetermined thickness between the inner surface of the tire and the functional component to thereby prevent the functional component from falling off and to mitigate shock associated with the rotation of the tire (Patent Document 1).

### CITATION LIST

### Patent Document

Patent Document 1: Japanese Unexamined Patent Application Publication No. 2013-226853.

### SUMMARY OF THE INVENTION

### Technical Problem

However, on the functional component, the centrifugal force due to the tire rotation acts and the functional component is pushed toward the inner circumferential surface of the tire. At this time, because the rubber layer of the patch component deforms due to its elasticity, a distance and a position of the functional component relative to the inner surface of the tire change due to the rotation speed of the tire. Hence there is a problem that the accuracy of detection of information indicative of the use state of the tire detected by the functional component does not become stable.

Accordingly, the present invention aims at providing a functional component and the like that can stably detect the information indicative of the use state of the tire. Solution to Problem

As a configuration of the functional component for solving the above-mentioned problem, there is provided a functional component in which an electronic component capable of acquiring information on a tire is housed and which is attachable to an inner circumferential surface of the tire, the functional component including: a housing having a housing part in which the electronic component is housed and a bottom surface to be opposed to the inner circumferential surface of the tire; a strain detection means provided on the bottom surface and configured to detect strain of the tire; a support part extending from the bottom surface toward the inner circumferential surface of the tire and more protruding than a surface of the strain detection means; and an elastic part made of an elastomer having a rigidity smaller than that of a material forming the support part and interposed between the bottom surface and the inner circumferential surface of the tire..

According to this configuration, by providing the support part on the bottom surface, even if the centrifugal force due to the tire rotation acts on the functional component, the support part supports the functional component, hence a distance between the inner surface of the tire and the strain detection means can be maintained constant, and variation in the accuracy of detection (improvement of accuracy) by the strain detection means can be reduced.

### BRIEF DESCRIPTION OF THE DRAWINGS

Figs. 1A and 1B are diagrams illustrating a functional component attached on a tire.
Fig. 2 is a sectional view and a partially enlarged view of the function component.
Fig. 3 is a plan view of a housing.
Fig. 4 is a diagram illustrating a schematic configuration of a strain detection part.
Figs. 5A and 5B are diagrams illustrating work process for attaching the functional component to the tire.
Fig. 6 is a diagram illustrating an adhesion process.
Fig. 7 is a diagram illustrating movement of the functional component.

Hereinafter, the present invention is described in detail through an embodiment of the invention, but the following embodiment is not intended to limit the invention set forth in the claims, and not all combinations of features described in the embodiment are essential to the solving means of the invention, and include selectively employed configurations.

### DESCRIPTION OF EMBODIMENT

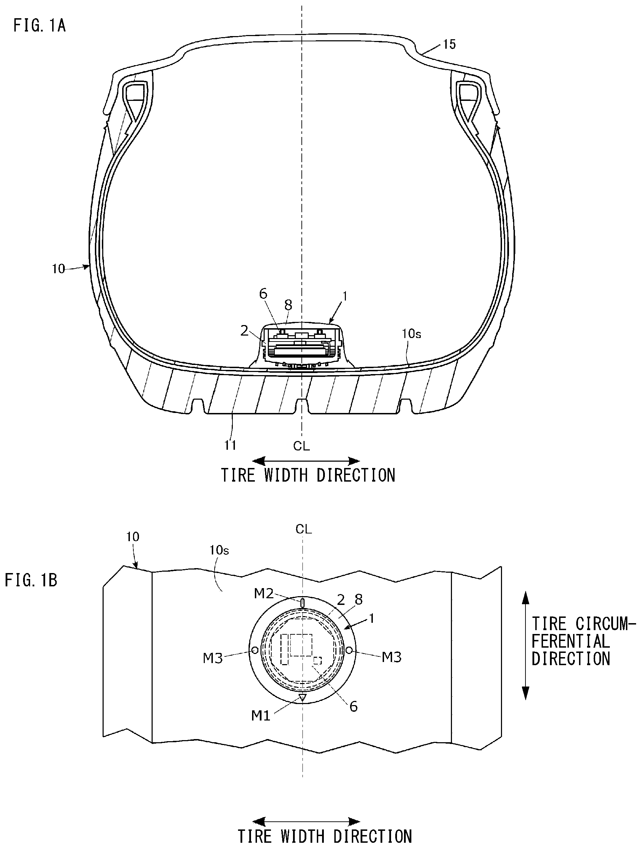

Figs. 1A and 1B are diagrams illustrating an attachment state of a functional component 1 attached to a tire 10. As illustrated in Fig. 1A, the tire 10 is assembled to a wheel rim 15, and an inner space of the tire 10 is filled with gas such as air.

As illustrated in FIGs. 1A and 1B, the functional component 1 is fixed by an adhesive agent to an inner surface (inner circumferential surface 10s) of the tire 10 and is disposed at the center CL in a width direction of the inner circumferential surface 10s that is a back side of a tread 11, which is to be in contact with a road surface, of the tire 10.

The functional component 1 has a housing (housing part) 2, a module 6 and a covering member 8. The type of the tire 10 to which the functional component 1 is attached is not particularly limited, but mainly the following tires are enumerated, which are: tires of automobiles traveling on ordinary paved roads (general roads and highways) such as passenger cars, trucks, buses or the like; and tires of aircraft or the like.

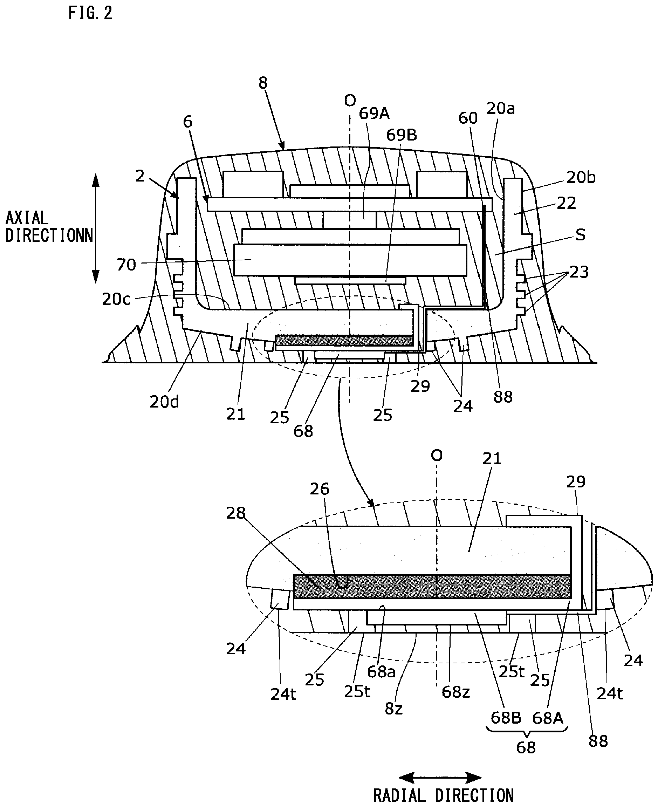

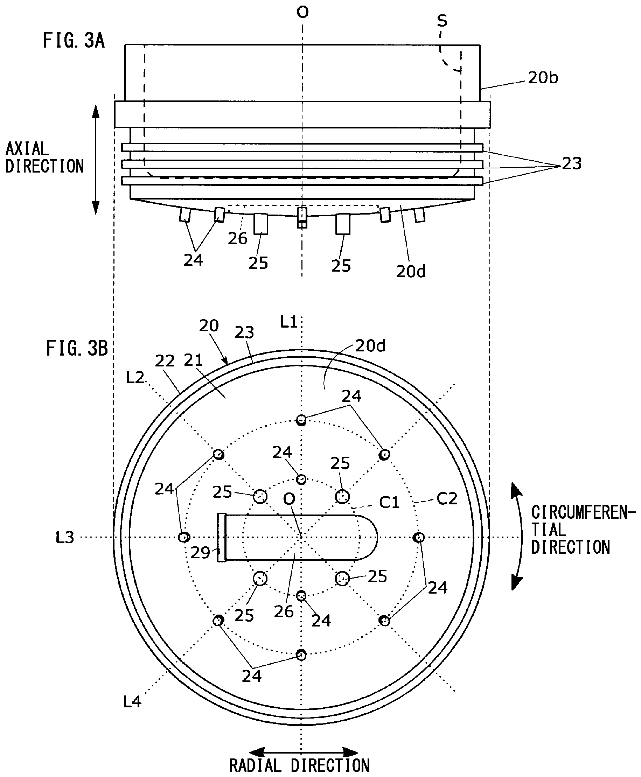

Fig. 2 is a sectional view and a partially enlarged view of the function component 1. Figs. 3 is a plan view of the housing 2.

As illustrated in Fig. 2 and Figs. 3A and 3B, the housing 2 includes a circular bottom part 21 and a peripheral wall part 22 rising from an outer peripheral edge of the bottom part 21 and is formed in a bottomed cylindrical shape with an opening on one side thereof, which forms a housing space S (housing part) for housing the module 6 surrounded by the bottom part 21 and the peripheral wall part 22. An inner circumferential surface 20a of the peripheral wall part 22 forming the housing space S is formed, for example, as a cylindrical tubular surface having a constant diameter, and an inner bottom surface 20c of the bottom part 21 is formed, for example, in a planar shape orthogonal to the center axis O of the peripheral wall part 22 (inner circumferential surface 20a). On the inner circumferential surface 20a and the inner bottom surface 20c, support means such as not-shown protrusions or the like for supporting the module 6 are formed. The housing 2 is formed of, for example, synthetic resin or the like form the viewpoint of weight reduction and strength of the functional component 1. Incidentally, the material forming the housing 2 may be changed appropriately taking the above-mentioned weight and the strength into consideration.

In the following description, directions are specified as an axial direction, a circumferential direction, a radial direction and the like, with the center axis O of the peripheral wall part 22 as a reference.

On the outer circumferential surface 20b of the peripheral wall part 22, plural annular convex parts 23 with concaves and convexes continuing along the center axis O are formed. The annular convex part 23 is provided on the lower side portion (bottom 21 side) of the peripheral wall part 22 and is formed in plural numbers (three in this example) at predetermined intervals in the axial direction. Each of the annular convex parts 23 extends along the circumferential direction of the outer circumferential surface 20b around the center axis O over one round. The annular convex part 23 may be configured to extend intermittently in the circumferential direction without extending over one round.

As illustrated in Fig. 2 and Fig. 3A, the outer bottom surface 20d of the bottom part 21 is formed in a convex shape that bulges, at the central portion of the outer bottom surface 20d, outwardly in the axial direction (opposite side to the housing space S) than the outer peripheral edge side of the outer bottom surface 20d. In this embodiment, the outer bottom surface 20d is formed in a spherical shape in which a center of curvature is provided on the center axis O and a predetermined radius of curvature is set. As illustrated in Fig. 1A and 1B, this outer bottom surface 20d is the surface that faces the inner circumferential surface 10s of the tire 10 when the functional component 1 is attached to the inner circumferential surface 10s of the tire 10.

Incidentally, the bulging shape of the outer bottom surface 20d is not limited to the spherical shape. For example, it may be a polygonal pyramidal shape such as a circular cone or a square cone with the position of the vertex set on the center axis O, or a pyramidal trapezoid or the like, or any other curved shape formed by a part of an elliptic sphere. The outer bottom surface 20d does not need to be bulged out over its entirety, but only portions in the vicinity of the center axis O may be partially bulged out in the curved shape as described above. For example, in a case where the tire outer diameter is large, the outer bottom surface 20d may be formed in a flat shape.

The bottom part 21 is provided with a strain sensor attaching part 26 which constitutes the module 6, a through hole 29 penetrating from the outer bottom surface 20d to the inner bottom surface 20c, and the plurality of convex parts 24 and the plurality of support parts 25 protruding from the outer bottom surface 20d.

The strain sensor attaching part 26 is provided on the outer bottom surface 20d as a one-way long concave part recessed in a flat plate shape that passes through the center axis O and extends along the radial direction. The direction of extension of the strain sensor attaching part 26 coincides with the direction of rotation of the tire 10. The bottom surface recessed as the concave part is formed , for example, in the planar shape parallel to the inner bottom surface 20c. In this strain sensor attaching part 26, as illustrated in Fig. 2, a base member 28, which becomes a base for attaching the strain sensor 68, is provided.

The base member 28 is formed, for example, in a planar shape which conforms to the shape of the strain sensor attaching part 26 recessed at the outer bottom surface 20d and a part thereof is embedded. The base member 28 is fixed to the strain sensor attaching part 26, for example, by an adhesive agent or the like. The base member 28 is formed, in the state of being fixed to the strain sensor attaching part 26, in a planar shape of which exposed surface (strain sensor attaching surface) intersects orthogonally with the axial direction. The thickness of the base member 28 is set so that, for example, the strain sensor attaching surface is exposed from the outer bottom surface 20d formed in the spherical shape at a position where the strain sensor attaching surface intersects the center axis O. With this, when the strain sensor 68 is attached to the base member 28, the strain sensor 68 is exposed from the outer bottom surface 20d, thus the strain associated with the rotation of the tire 10 can be detected precisely. For the base member 28, an elastomer such as rubber is used, and in this embodiment, silicon rubber with a Shore A hardness of about 50 was used.

As illustrated in Figs. 2 and 3 (3A and 3B), the through hoke 29 is provided adjacent to one end side of the strain sensor attaching part 26. The through hole 29 extends along the axial direction from the inner bottom surface 20c to the outer bottom surface 20d of the housing 2, and is provided as a through hole penetrating through the bottom part 21. The through hole 29 is formed, for example, to be a rectangular shape in a cross-sectional view orthogonal to the direction of extension. In the through hole 29, wiring 88 extending from the strain sensor 68 provided to be exposed to the outside of the housing 2 is inserted.

As illustrated in Fig. 3B, the convex part 24 and the support part 25 are provided on the outer bottom surface 20d of the bottom part 21, in such a manner as to avoid the above-mentioned strain sensor attaching part 26 and the through hole 29. The convex parts 24 are selectively provided, while avoiding the strain sensor attaching part 26 and through hole 29, for example, at positions where two concentric circles C1 and C2, which have different diameters and which are centered at the center axis O penetrating the outer bottom surface 20d, intersect with a plurality of straight lines L1 to L4 which pass the center axis O and which are set at equal intervals in the circumferential direction. The positions where the convex parts 24 are formed are not limited to the above-mentioned positions and may suitably be set, however, it is preferable to form them in a symmetry pattern such as a point symmetry around the center axis O, or a line symmetry with respect to the straight line L3 (the direction of extension of the strain sensor attaching part 26) in Fig. 3B.

The convex parts 24 are formed in a cylindrical shape protruding in a normal direction of the outer bottom surface 20d at the respective positions. The tip end of the convex part 24 is formed in a planar shape orthogonal to the direction (normal direction of the outer bottom surface 20d) in which the convex part 24 protrudes. The length of the convex part 24 extending from the outer bottom surface 20d is described below.

Incidentally, the shape of the tip end is not limited to the planar shape, but may be a spherical shape. Further, the shape of the convex part 24 is not limited to the cylindrical shape, but may be a polygonal pillar, a cone or the like. Furthermore, instead of the convex part 24 protruding from the outer bottom surface 20d, a concave part, like a dimple of a golf ball, recessing from the outer bottom surface 20d toward the inner bottom surface 20c may be provided. The convexity 24 protruding from the outer bottom 20d may be replaced by a concave portion that depresses from the outer bottom 20d toward the inner bottom 20c, like a dimple on a golf ball.

As illustrated in Fig. 3B, the support part 25 is provided in plural numbers around the strain sensor attaching part 26. In this embodiment, the support parts 25 were formed at four positions of intersections where the straight lines L2 and L4 intersect with the circle C1 that was used to form the convex part 24. That is, as illustrated in Fig. 3B, the support parts 25 are so provided that, when planarly viewing the outer bottom surface 20d, the end of the strain sensor attaching part 26 in the extension direction exceed the rectangular-shaped area enclosed by four support parts 25. The support parts 25 are formed in the same shape at each position, for example, in the columnar shape extending from the bottom surface 20d along the axial direction. The support part 25 is set to be larger in diameter than the diameter of the convex part 24. The tip end of each support part 25 is formed in a planar shape intersecting orthogonally with the direction of extension of the support part 25.

The extension length of each support part 25 is so set that, when the strain sensor 68 is attached to the housing 2, the tip end of the support part 25 protrudes more than the surface of the strain sensor 68. That is, as illustrated in Fig. 1A and 1B, the length of the support part 25 is set so that, when the functional component 1 is attached to the tire 10, the tip end of the support part 25 comes most proximate to the tire inner circumferential surface 10s.

As illustrated in Fig. 2, the module 6 includes a circuit board 60 on which electronic components are mounted or connected, and a battery 70, and is configured to be able to be housed in the housing space S of the housing 2 described above.

As illustrated in Fig. 2A, the circuit board 60 is provided with a plurality of sensors, for example such as a temperature sensor, a pressure sensor, an acceleration sensor and a strain sensor 68 or the like that function as a state acquisition means for acquiring a state in the tire 10, a control means that controls the operation of these plural sensors and the operation of the transmission means and includes a memory means that store the history of detected values detected by each sensor, an electronic component that functions as a not-shown transmission means or the like for outputting the detected value detected by each sensor to the outside of the tire, and metal terminals 69A and 69 B that supply the power from the battery 70 to these components. Incidentally, the configuration of the circuit board 60 is not limited to this.

The temperature sensor, the pressure sensor and the acceleration sensor are mounted on the circuit board 60, and the strain sensor 68 is connected to the circuit board 60 via the wiring 88.

The control means is configured, for example, as a one-chip IC or the like those functions as a so-called computer and is mounted on the circuit board 60. The control means is provided with a CPU as a computing means provided as a hardware resource, a ROM and a RAM as the memory means, and an input/output interface as an external device, and other components.

The control means executes a predetermined program upon detection of, for example, the rotation (centrifugal force) of the tire 10 by the acceleration sensor, stores a temperature, a pressure, an acceleration and a strain in the tire 10, which were detected by the temperature sensor, the pressure sensor, the acceleration sensor and the train sensor 68, respectively, in the memory means as a history, and outputs them to the transmission means via the input/output interface. The temperature, the pressure, the acceleration and the strain outputted to the transmission means are then outputted via the transmission means to, for example, a vehicle body unit provided in a vehicle.

The transmission means is mounted on the circuit board as a transmission circuit and transmits the temperature, the pressure and the acceleration, which have been measured, to the outside of the tire via a not-shown antenna. Signals such as the temperature, the pressure, the acceleration and the strain transmitted wirelessly from the transmitting means are received, for example, by a wireless circuit of the main unit provided in a not-shown vehicle, and information on the tire state (temperature, pressure, or presence or absence of abnormality) is displayed on ta display unit provided inside the vehicle.

The battery 70 is a so-called disk-shaped button battery, which is connected to the circuit board 60 as each electrode thereof is sandwiched between the metal terminals 69A; 69B provided on the circuit board 60, and supplies the power to each sensor, the control means, the transmitting means and other components. The battery 70 is not limited to the button battery, but may be a cylindrical battery, and its form is not particularly limited.

The acceleration sensor 66 is a sensor that can measure accelerations in three axial directions, for example, the tire width direction, the radial direction and the circumferential direction (tangential direction of rotation), and is attached so that each measurement direction is turned in a predetermined direction with respect to the circuit board 60. It is preferable that the acceleration sensor 66 be attached on the circuit board 60 in such a manner that, when attached to the tire 10 as the functional component 1, the acceleration sensor 66 is positioned at the center in the tire width direction. In addition, not-shown positioning means, which are fitted to each other, are provided on the circuit board 60 and in the housing 2. With this, a measurement direction of the acceleration sensor 66 with respect to the housing 2 is defined.

As illustrated in Fig. 2A, the strain sensor 68 is provided with a sensitive strip 68A and a strain detection part 68B. The sensitive strip 68A is formed of a thin metal plate having an elasticity, for example, and is provided on the base member 28.

The sensitive strip 68A is positioned, for example, as one end side thereof is extended into the housing space S via the through hole 29 and locked by a not-shown locking means provided in the housing 2.

The strain detection part 68B is attached on an outer surface of the sensitive strip 68A so as to be positioned on the center axis O, and detects a strain of the tire 10 occurring when the tire 10 steps in or kicks out, through deformation of the sensitive strip 68A associated with the rotation of the tire 10. The strain detection part 68B may be positioned at a position on the center axis O, which is the closest position relative to the inner circumferential surface 10s of the tire 10.

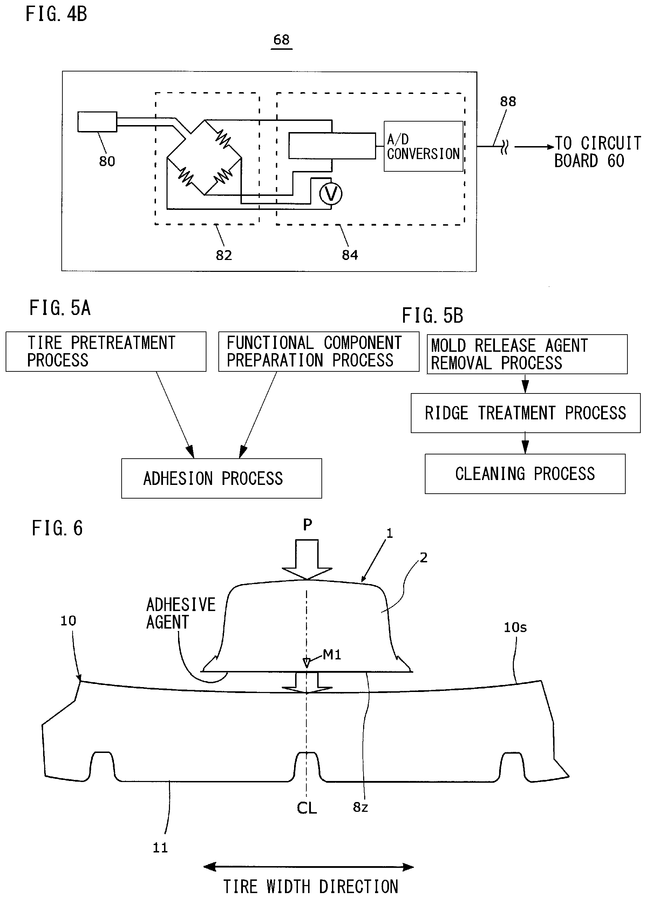

Fig. 4 is a diagram illustrating a schematic configuration of the strain detection part 68B. As illustrated in Fig. 4, the strain detection part 68B is provided with, for example, a strain gage 80, a bridge circuit 82, a strain amplifier 84 and so on. The strain gage 80 constitutes part of the bridge circuit 82. To the bridge circuit 82, for example, a voltage is applied from the strain amplifier 84, and the bridge circuit 82 outputs, as a signal, a voltage difference associated with a change in the resistance value of the time when the strain gage 80 detected a strain.

The strain amplifier 84 is provided with a signal amplifying circuit, an A/D converter and a power supply part. The strain amplifier 84 amplifies the signal inputted from the bridge circuit 82 by the signal amplifying circuit, converts the amplified signal into a digital signal by the A/D converter, and outputs the digital signal to the circuit board 60. In other words, a voltage value corresponding to a strain amount detected by the strain gage 80 is outputted, as the digital signal, by the strain amplifier 84 to the circuit board 60.

The strain sensor 68 is connected to the circuit board 60 by the wiring 88 passing through the through hole 29 provided in the bottom part 21 of the housing 20.

In this embodiment, for the strain detection part 68B, a sensor chip was applied, in which functions of the strain gage 80, of the bridge circuit 82 and of the strain amplifier 84 were integrated into one chip for example, and which was configured as a so-called piezo resistance semiconductor. With the strain detection part 68B, for example, a measurement surface 68a is defined and the strain detection part 68B is attached so that the measurement surface 68a is opposed to the surface of the sensitive strip 68A. In this way, by detecting via the sensitive strip 68A, as the strain, the deformation of the tire 10 by the strain sensor 68 configured by the semiconductor, it is possible to improve the reliability of measurements and durability, to reduce the power consumed for detection of the deformation of the tire 10, and to share the power with electronic components such as other sensors.

The module 6 configured as described above is positioned and housed in such a manner that the battery 70 is attached to the circuit board 60 and disposed to be opposed to the inner bottom surface 20c of the housing space S, and the direction of measurement by the acceleration sensor mounted on the circuit board 60 is turned in a predetermined direction with respect to the housing 2.

As illustrated in Fig. 2, the functional component 1 is integrally covered by the covering member 8 in a state where the module 6 is housed in the housing space S of the housing 2. The covering member 8 is molded so as to cover the entire outside of the housing 2 while being filled in the housing space S by molding, for example. For the covering member 8, an elastomer such rubber and the like having rigidity lower than that of the support part 25 is used. As the elastomer, it is preferable that it can follow the deformation caused in association with the rotation of the tire 10 when the portion where the functional component 1 is attached was brought into contact with the ground.

The covering member 8 after having been molded is provided with an elastic part which is interposed between the outer bottom surface 20d and the inner circumferential surface 10s, when the functional component 1 is attached to the inner circumferential surface 10s of the tire 10. On this elastic part, the adhesion surface 8z to be adhered to the inner circumferential surface 10s of the tire 10 is molded. The adhesion surface 8z is formed in planer shape which intersects orthogonally with the center axis O. In this embodiment, the adhesion surface 8z is formed so as to be flush with the tip end surfaces 25t of the plurality of support parts 25. In the covering member 8, a communication hole is provided, which enables the temperature sensor and the pressure sensor to contact with air in the tire 10.

The covering member 8 is filled, by molding, into the housing space S of the housing 2 in which the module 6 has been housed, covers the outer periphery of the peripheral wall part 22 of the housing 2 while covering the opening part of the housing 2, covers the outer periphery of the peripheral wall part 22 so as to be fan-shaped toward the outer bottom surface 20d of the housing 2, and molded into a truncated cone shape having a planar part that intersects orthogonally with the center axis O. This planar part functions as the adhesion surface 8z to be adhered to the tire 10. In this embodiment, the adhesion surface 8z is molded to be flush with the tip end part 25t of the support part 25, for example.

On the outer surface of the covering member 8, as illustrated in Fig. 1B, attachment marks M indicating the attachment direction are molded at the time of the molding. The attachment marks M are formed as a △ mark M1 indicating a front side and a mark M2 indicating a rear side in the direction of rotation, and two ∘ marks M3; M3 indicating the tire width direction. The mark M1 corresponds to the tip end side of the sensitive strip 68A exposed from the housing 2, and the mark M 2 is formed to correspond to the rear end side.

As illustrated in the enlarged view of Fig, 2, a relationship of the support part 25, the strain sensor 68 and the convex part 24, is so set that the tip end (tip end surface 25t) of the support part 25, the surface 68z of the strain sensor 68 and the tip end 24z of the convex part 24 become sequentially lower in this order. The lengths, extending from the outer bottom surface 20d, of the support part 25 and the convex part 24 may be set so as to satisfy the above-mentioned relationship, with the thickness of the strain sensor 68 as a reference.

In this way, by making the covering member 8 as a filler to be filled in the housing space S and integrally molding with the housing 2 to protect the housing 2, the manufacturing process can be simplified. In addition, since the housing 2 is provided with the plurality of annular convex parts 23 on the outside of the peripheral wall part 22 and the plurality of convex parts 24 on the outer bottom surface 20d of the bottom part 21, the positional displacement relative to the covering member 8 is prevented, hence even when external force is applied to the functional component 1 in association with the rotation of the tire 10, the housing 2 and the covering member 8 can be integrated.

Figs. 5A and 5B are diagrams illustrating work process for attaching the functional component 1 to the tire 10.

The functional component 1 formed as described above is adhered to the inner circumferential surface 10s of the tire 10 by means of an adhesive agent, such as an instantaneous adhesive agent, that forms a thin film layer on the adhesion surface 8z after having been adhered. The process of adhering the functional component 1 to the tire 10 is described below.

As illustrated in Fig. 5A, the process of attaching the functional component 1 to the tire 10 is largely divided into a process of pretreating the tire 10 (tire pretreatment process) and an adhesion process.

As illustrated in Fig. 5B, the tire pretreatment process includes a mold release agent removal process, a ridge treatment process and a cleaning process. The mold release agent removal process is a process for removing a mold release agent adhered to the inner circumferential surface of the tire after vulcanization-molding, in which, for example, a spray-type degreasing agent is sprayed on ta predetermined position of the inner circumferential surface 10s of the tire 10 and the mold release agent is wiped off.

The ridge treatment process is a process for adjusting (flattening) the ridge (convex part) formed on the inner circumferential surface 10s of the tire 10 by a bladder in the vulcanization-molding process to the surrounding level, for example, polishing by buffing or the like using a rotary tool such as a leutor. Incidentally, in a case where this process cannot be performed, this process may be omitted. In the cleaning process, cleaning spray is applied to remove buffing grouts and the like, and thereafter, drying using a dryer or the like.

As illustrated in Fig. 6, in the adhesion process, the adhesive agent is applied to the entire adhesion surface 8z and the functional component 1 is pressed with a predetermined force and adhered to the inner circumferential surface 10s of the tire 10. For the adhesive agent, for example, an instantaneous adhesive agent or the like can be used, and it is preferable to use an adhesive agent having elasticity after cured (adhered). It is more preferable to use an adhesive agent that makes a thin adhesion layer to be formed between the adhesion surface 8z and the inner circumferential surface 10s.

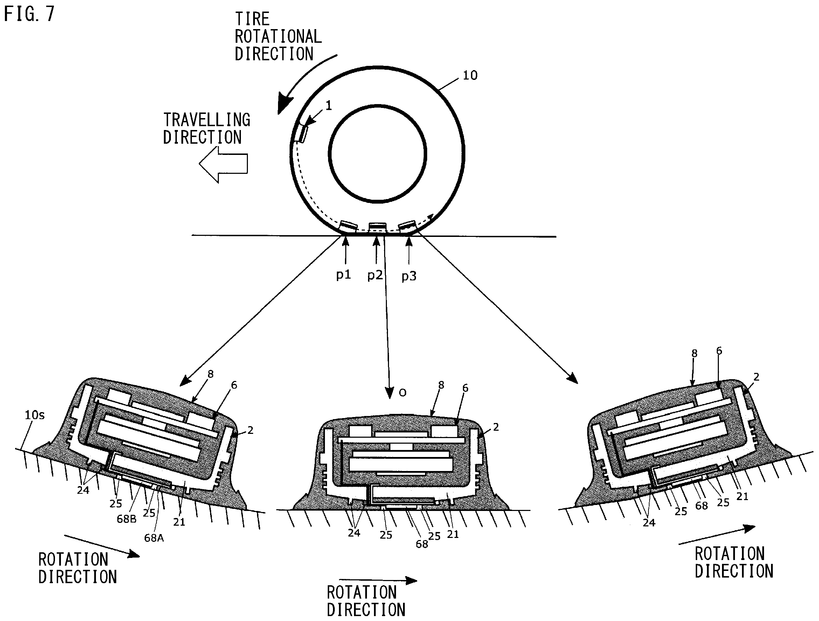

Fig. 7 is a diagram illustrating movement of the functional component.

As illustrated in Fig. 7, because the support part 25 is in contact with the inner circumferential surface 10s of the tire 10 even though the centrifugal force P associated with the rotation of the tire 10 acts the functional component 1, the position of the functional component 1 relative to the inner circumferential surface 10s of the tire 10 does not change.

In other words, even in cases where the functional component 1 is in a step-in position p1 in the rotation of the tire 10, in a ground contact position p2 and in a kick-out position p3, the tip ends of the four support parts 25 provided in the housing 2 are constantly in contact with the inner circumferential surface 10s, thus the distance between each sensor provided in the housing 2 and the inner circumferential surface 10s is maintained constant. Accordingly, even though the centrifugal force P acting on the functional component 1 changes resulting from the change in the rotational speed of the tire 10, stable measurement can be performed and accuracy of the detection of the use state of the tire can be improved.

In addition, as the tip end of the strain sensor 68 is more protruding in the rotational direction of the tire 10 than the support part 25, the deformation of the tire 10 when reaching the step-in position p1 for example, is transmitted through the covering member 8. Thus, the accuracy of detection of the deformation of the tire 10 can be improved. Accordingly, the closer the position where the support part 25 is disposed to the strain detection part 68B of the strain sensor 68 is, the faster the deformation of the tire 10 associated with step-in can be detected, and the longer the deformation of the tire 10 associated with kick-out can be detected.

In this way, taking the action of the support part 25 into consideration, the number of the support part 25 is not limited to four. Preferably, they may be provided in the same number sandwiching the strain sensor 68, and more preferably, they may be provided to be symmetrical sandwiching the strain sensor 68. In other words, as the least number of the support part 25, it may be provided to sandwich the strain sensor 68 in between two support parts 25. In this case, as described above, by disposing the support parts in the vicinity of the strain detection part 68B provided at the center of the sensitive strip 68A, the deformation of the tire 10 can be detected accurately.

Furthermore, in a case where the strain sensor 68 is disposed between the support parts 25 so as to be sandwiched, each support part 25 may be disposed in the vicinity of the strain sensor 68. By providing the support part 25 in this manner, the deformation of the tire 10 can be detected stably.

In the above-described embodiment, the explanation has been given in a way that the elastic part interposed between the housing 2 and the inner circumferential surface 10s of the tire 10 is integrally formed as the covering member 8 that covers the entire housing 2. However, it is not limited to this, and a range of covering the housing 2 may be suitably set. For example, by forming the covering member 8 in the range covering from the outer bottom surface of the housing 2 to the annular convex part 23, as described above, by virtue of the action of the plural convex parts 24 and the annular convex parts of the housing 2, the displacement between the covering member 8 and the housing 2 can be prevented. In this case, the housing space S of the housing 2 in which the module 6 was housed may be filled with a so-called potting material to fix the module 6 to the housing 2.

In the above-described embodiment, the explanation has been given in a way that the tip end surface 25t of the support part 25 is made flush with the adhesion surface 8z, that is, the tip end surface 25t is exposed to the adhesion surface 8z, but it is not limited to this. For example, the molding may be done to cover by the covering member 8 so that the tip end surface 25t is not exposed. In this case, needless to say that, in the molding of the covering member 8, it is preferable to set the thickness between the adhesion surface 8z and the tip end surface 25t to be thin.

### REFERENCE SIGN LIST

1: Functional component, 2: Housing, 6: Module, 8: Covering member, 8z: Adhesion surface, 10: Tire, 10s: (Tire) inner circumferential surface, 20a: Inner circumferential surface, 20b: Outer circumferential surface, 20c: Inner bottom surface, 20d: Outer bottom surface, 21: Bottom part, 22: Peripheral wall part, 23: Annular convex part, 24: Convex part, 24z: Tip end, 25: Support part, 25t: Tip end surface, 26: Strain sensor attachment part, 28: Base member, 29: Through hole, 60: Circuit board, 68: Strain sensor, 68A: Sensitive strip, 68B: Strain detection part, 68z: Surface, S: Housing space.

## Claims

1. A functional component in which an electronic component capable of acquiring information on a tire is housed and which is attachable to an inner circumferential surface of the tire, the functional component comprising:
a housing having a housing part in which the electronic component is housed and a bottom surface to be opposed to the inner circumferential surface of the tire;
a strain detection means provided on the bottom surface and configured to detect strain of the tire;
a support part extending from the bottom surface toward the inner circumferential surface of the tire and more protruding than a surface of the strain detection means; and
an elastic part made of an elastomer having a rigidity smaller than that of a material forming the support part and interposed between the bottom surface and the inner circumferential surface of the tire.

2. The functional component according to claim 1, wherein the support part is provided in plural numbers.

3. The functional component according to claim 2, wherein the strain detection means is disposed among the plurality of support parts.

4. The functional component according to any of claims 1 to 3, wherein the functional component comprises a convex part which protrudes from the bottom surface toward the inner circumferential surface of the tire and a tip end thereof is positioned more on a side of the bottom surface than a tip end of the support part.

5. The functional component according to any of claims 1 to 4, wherein the tip end of the support part is exposed from the elastic part.

6. A structure for attaching the functional component according to any of claims 1 to 5 to a tire, wherein
a tip end surface of the support part and the elastic part are attached to the inner circumferential surface of the tire via an adhesive agent.

7. A tire provided with the structure for attaching the functional component according to claim 6.
